# EUROPEAN PATENT SPECIFICATION

(11) **EP 4 408 707 B1**
(45) Date of publication and mention of the grant of the patent: **05.11.2025**
(21) Application number: 22877050.9
(22) Date of filing: 29.09.2022
(51) Int. Cl.: B60R 19/00, B60R 19/50

(54) **MULTILAYERED SHOCK ABSORBER STRUCTURE FOR BUMBERS**
MEHRSCHICHTIGE STOSSDÄMPFERSTRUKTUR FÜR BLUMEN
STRUCTURE MULTICOUCHES D'AMORTISSEUR DE CHOCS POUR PARE-CHOCS

(30) Priority: 30.09.2021 TR 202115319
(43) Date of publication of application: 07.08.2024
(73) Proprietor: Oyak Renault Otomobil Fabrikalari Anonim Sirketi, 16225 Nilüfer Bursa (TR)
(72) Inventor: GÜL, Kamil Armagan, 16215 Nilüfer/Bursa (TR)
(86) International application number: PCT/TR2022/051060
(87) International publication number: WO 2023/055331

(56) References cited:
- CN-B- 110 194 115
- CN-U- 204 124 056
- CN-U- 207 000 085
- DE-A1- 10 058 431
- US-A1- 2008 184 802
- US-A1- 2019 168 701

## Description

### FIELD OF THE INVENTION

The invention relates to an implementation that provides the connection on the bumper and also provides an increase in strength in these regions, especially for brackets which are components such as sensors or clips are mounted on the bumper.

### PRIOR ART

Bumpers are surfaces/items that are used especially in the front and rear parts of vehicles and are usually the first contact area at the time of collision. There are bumper bars and shock absorbing components in the behind of the bumpers, and they provide the absorption of some of the energy in this area in the event of a collision. Bumpers, on the other hand, are among the vehicle body components that provide visual aesthetics to the vehicle by closing these areas, prevent damage in case of collision by closing sharp corners, and absorb some of the energy at the same time. The document US2008/184802A1 discloses a bumper according to the preamble of claim 1.

In the known art, bumpers are made of plastic material and have the ability to stretch. However, it is damaged by breaking when the stretch threshold value is exceeded.

Vehicles have some equipment with the developing technology. Especially sensor components that increase driving safety, fog lights, daytime running lights are usually mounted on bumpers. Considering the sensor applications, the slots that allow the sensors to be attached to the bumper, and the slots to fix the clips that enable the cables connect to the sensors to be mounted on the bumper are formed at the stage of the polymer injection molding process in a single piece with the bumper.

There is no known technique or application on the vehicle, that increases the strength in these areas, absorbs the energy in the event of an impact or prevents the bumper from breaking.

In addition, there are areas on the vehicle bumpers that increase strength and act as shock absorbers. There are shock absorbing components in these areas. The structure and shape of the mentioned components vary for each vehicle. This is a result that increases the production cost.

As a result, all abovementioned problems have made it necessary to make an improvement in the relevant technical field.

### AIM OF THE INVENTION

The present invention aims to eliminate the abovementioned problems and to make a development in the relevant technical field.

The main objective of the invention is to reveal the multi-layered structure, which increases the strength in the bracket regions that enables the mounting of the sensor and cable clips in the bumpers of the vehicles, and also provides energy absorption that ensures the fixing of the mentioned brackets to the bumper after the bumper production Another objective of the invention is to provide an alternative solution to the shock absorbing elements used in large areas on the bumper.

Another objective of the invention is to create a multi-layered shock absorber structure that can be integrated directly on the bumper, as an alternative to bumper shock absorber elements that vary for each vehicle types/model.

Another objective of the invention is to prevent breakage/cracking in the impact areas of the bumper in small impact/collision.

In the preferred embodiment of the invention, the structure that provides the adhesion between the base layer, the intermediate layer and the top layer is self-renewing, and small-scale cracks can be repaired by exposure to UV light. In this way, it can be repaired quickly in daylight or by applying UV light to the surface.

### BRIEF DESCRIPTION OF THE INVENTION

The invention is related to shock absorbing-stiffening multi-layer structure for bumpers so as to fulfil all aims mentioned above and will be obtained from the following detailed description.

The invention relates a method in vehilce bumpers to enable mounting of sensor clip or absorber on the inside of the bumper which increases the strength and creates an impact damping effect in the designated mounting regions of said bumper by implementation of the process steps according to claim 1.

In a preferred embodiment by means of the invention, a method is presented that ensures the orientation of the impact and the cracking in the desired region and direction by adjusting the placement and stiffness of the layers during the impact damping effect. In a preferred embodiment of the invention, haves the process of applying at least one layer of adhesive interlayer between two successive layers, after the curing process of the previous layer to apply an upper layer when forming a unidirectional fibrous structure consisting of at least three layers as the base layer, the interlayer, the top layer.

In a preferred embodiment of the invention, that includes a unidirectional extending fiber component, which is UD tape.

In a preferred embodiment of the invention, that consists of providing multi-directional strength the unidirectional fiber components by laid in different directions, which are UD tapes. (Etc. 0°-90°, 0°-45°-90°-135° Angles.)

In a preferred embodiment of the invention, the absorber that is located on the strength increasing component on the bumper is integrated between the layers during the formation of the said strength increasing component.

In a preferred embodiment of the invention, where the absorber on the strength increasing component on the bumper is mounted on the insert integrated between the layers during the formation of the said strength increasing component.

In a preferred embodiment of the invention, wherein each layer is cured using a Xenon lamp during the formation of the strength enhancing component.

In a preferred embodiment of the invention, curing processes are applied with UD tapes and using Xenon lamp on the bumper using a 5-axis robot.

In a preferred embodiment of the invention, the inserts that contains bolts are positioned between the two layers during the formation of the strength increasing component to enable direct mounting of the components.

The protection scope of the invention is specified in the claims and cannot be limited to the description made for illustrative purposes in this brief and detailed description. It is clear that a person skilled in the art can present similar embodiments in the light of the above descriptions without departing from the main theme of the invention.

### BRIEF DESCRIPTION OF DRAWINGS

In Figure 1, the representative drawing of the system in which the invention is applied is given.
In Figure 2, the cross-sectional view of the structure which is the subject of the invention is given.
In Figures 3A, 3B and 3C alternative solutions applied on the bumper during the application of the invention is given.

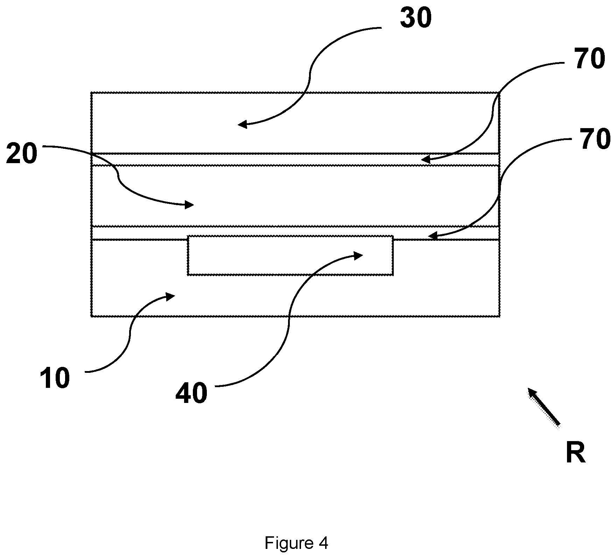

In Figure 4, a representative cross-sectional drawing of another preferred embodiment of the invention is given.

### DESCRIPTION OF THE REFERENCES IN FIGURES

10. Base layer
20. Interlayer
30. Top layer
40. Insert
50. Bracket
60. Cable
70. Adhesive interlayer
A. Absorber
B. Bumper
C. Clip
R. Strength-enhancing component
S. Sensor

### DETAILED DESCRIPTION OF THE INVENTION

In this detailed description, the invention multilayered shock absorber structure for bumpers (B) is described by means of examples only for clarifying the subject matter such that no limiting effect is created.

The invention relates to the strength-enhancing component (R) ant its use, which is a multi-layered structure that acts as a shock absorber in these regions, while provides the connection on the bumper especially for brackets which are components such as sensors or clips are mounted on the bumper.

A method in vehicles, on the bumpers (B), to enable mounting of sensor (S) clip (C) or absorber (A) on the inside of the bumper (B) which increases the strength and creates an impact damping effect in the designated mounting regions of said bumper (B) and feature by implementation of process steps; in the strength-enhancing component (R), consisting of tapes with unidirectional extending fibrous structure, consisting of at least three layers, that are the base layer (10), the interlayer (20), the top layer (30), positioning at least one insert (40) between at least two consecutive layers of said layers, positioning at least one bracket (50) in order to mount components between at least two consecutive layers of said layers, curing mentioned layers with UV light during the application.

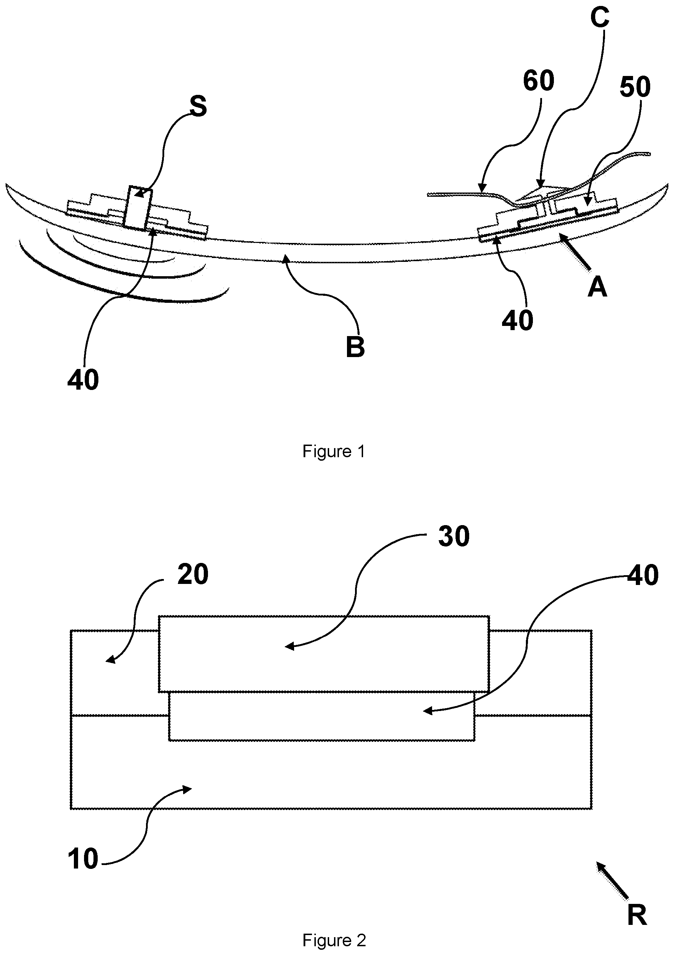

In Figure 2, the representative cross-section of the multi-layered structure, which is the subject of the invention, is given. The multi-layered structure of the invention includes at least one base layer (10) that will contact the bumper (B) surface directly. There is an interlayer (20) on the said base layer (10). In the uppermost part of the structure, the top layer (30) is located. In the inner part of the interlayer (20), there is at least one insert (40) structuring to be positioned between the base layer (10) and the top layer (30). The layers are directly welded with each other in the mentioned configuration.

Said base layer (10) can be mounted to the bumper (B) with an adhesive additional layer or using Ultrasonic or ultraviolet welding surfaces on the surface of said base layer (10) that is contacting with the bumper (B).

Figure 1 shows, a representative drawing that is the implementation of the invention. The base layer (10) contacts the inner surface of the bumper (B). On the base layer (10) in the configuration described above at least one insert (40) configuration is located in the inner part of the interlayer (20), between the base layer (10) and the top layer (30). There is the top layer (30) structure on the top surface. Within the scope of the invention, brackets (50) can be fixed on the said insert (40) in the multi-layered structure obtained to form the strength-enhancing component (R). In the preferred embodiment of the invention, each said bracket (50) is adhered directly onto the insert (40) together with the top layer (30).

As seen in Figure 1, the sensor (S) can be positioned on each bracket (50) and/or at least one clip (C) that is positioned on the bracket (50) the cables (60) can be fixed on the bumper (B) according to the usage area of the bracket (50).

Within the scope of the invention, with the strength-enhancing component (R), an absorber (A) is integrated into the regions where the brackets (50) must be positioned on the bumper (B) by design. In addition, the said strength-enhancing component (R) can be applied to different desired areas of the bumper (B). In this way, absorber (A) adaptation, which can be adapted to all bumper (B) configurations regardless of product design, can be achieved.

In the preferred embodiment of the invention, the base layer (10), the interlayer (20) and the top layer (30) are preferably made of PET and/or biopolymer material.

In the preferred embodiment of the invention, the base layer (10), the interlayer (20) and the top layer (30) contain unidirectionally extending fibrous structure. Preferably, said base layer (10), interlayer (20) and top layer (30) are UD tape.

In another preferred embodiment of the invention, the base layer (10), the interlayer (20) and the top layer (30) contain unidirectionally extending fibrous structure. And these structures can be placed at different planar angles and provide strength in different directions.

### Application of invention

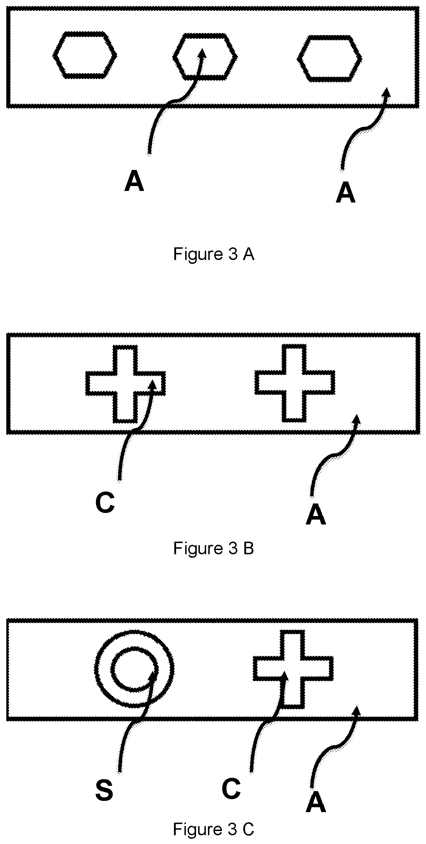

The strength-enhancing component (R) of the invention can be applied to the vehicle bumper (B) especially to the desired parts in accordance with the forms shown in figure 3 A, figure 3 B and figure 3 C.

In this context, the base layer (10) is applied to the desired area of the bumper (B) as first layer. Subsequently, the said layer is rapidly cured under UV light. Afterwards, the insert (40) that is suitable for the area of usage is located and the interlayer (20) is applied as second layer on the base layer (10) and the insert (40). Similarly, the said interlayer (20) is cured under UV light and the top layer (30) is applied on it as the third layer. With the curing of the top layer (30) with UV light, the strength-enhancing component (R) becomes ready.

In a preferred embodiment of the invention, brackets (50) that is suitable for clip (C) or sensor (S) mounting can be applied directly or together with the insert (40) on the base layer (10). Other layers can be applied on this structure after the curing process of the base layer (10).

In a preferred embodiment of the invention, it is possible to mount components with different desired features on the bumper (B) by using functional inserts (40). For example, a component suitable for the structurally used insert (40) in this region can be mounted by using an insert (40) containing a bolt or nut on the bumper (B),

Within the scope of the invention, said base layer (10) is fixed on the bumper (B) with the curing of the base layer (10). In the preferred embodiment within the said fixing process, the base layer (10) is welded with the bumper (B) material (plastic). In an alternative embodiment, the base layer (10) adheres to the bumper (B) in a high strength.

In the preferred embodiment of the invention, there is an adhesive interlayer (70) between the layers that are the base layer (10), the interlayer (20) and the top layer (30). Said adhesive interlayer (70) is the adhesive applied between the layers. **In** the preferred embodiment, said adhesive interlayer (70) may be resin-based.

In the preferred embodiment, structure can become stable by increasing its effectiveness during the curing of the layer which is located on the adhesive intermediate layer (70).

In the preferred embodiment of the invention, the inserts (40) are made of steel material. In other preferred embodiments, hard plastic or composite materials can be used.

In the preferred embodiment, a Xenon light source used for curing as a light source.

In Figure 3A, the structure of the absorber (A) that is fixed to the bumper (B) with the strength-enhancing component (R) with increased shock absorbing feature is given within the scope of the invention. In this context, the absorber (A) can be positioned directly on the base layer (10) together with the insert (40) or preferably without using the insert (40). said absorber (A) merges with the bumper (B) with the curing of the base layer (10) and/or the interlayer (20).

In Figure 3B, a representative drawing showing the application of the clips (C) on the bumper (B) within the scope of the invention is given. In this scope, the clip (C) holding bracket (50) is positioned directly on the base layer (10) or the insert (40) positioned to lower section of the bracket (50) during the formation of the layers, and the layers are cured within the scope of the above-mentioned process steps. Similarly, in figure 3C shows, common usage of configuration the sensor (S) and clip (C) application together. Similar to the clip (C) process, the sensor (S) holding brackets (50) that enables the sensors (S) to be held are positioned on the base layer (10) with the insert (40) at the bottom or directly positioned/adhered on the bumper (B) during the curing processes, and then other layers are formed on the upper part and the curing processes are completed.

In the preferred alternative embodiment of the invention, the strength-enhancing component (R) structure, which is in the form of the above-mentioned base layer (10) - adhesive interlayer (70) - interlayer (20) - adhesive interlayer (70) - top layer (30) can be more than three main layers by increasing the number. In this context, an adhesive interlayer (70) can be used in between the layers or direct application can be made one layer top of other layer.

## Claims

1. A method in vehicles on the bumpers (B), to enable mounting of sensor (S), clip (C) or absorber (A) on the inside of the bumper (B), which increases the strength and creates an impact damping effect in the designated mounting regions of said bumper (B),
**characterized**
**by** implementation of process steps;
a. In the strength-enhancing component (R), consisting of tapes with unidirectional extending fibrous structure, consisting of at least three layers, that are the base layer (10), the interlayer (20), the top layer (30),
b. Positioning at least one insert (40) between at least two consecutive layers of said layers,
c. Positioning at least one bracket (50) in order to mount components between at least two consecutive layers of said layers,
d. Curing mentioned layers with UV light during the application.

2. A method according to claim 1, ***characterized in that;*** having the process of applying at least one layer of adhesive interlayer (70) between two successive layers, after the curing process of the previous layer to apply an upper layer when forming a unidirectional fibrous structure consisting of at least three layers as the base layer (10), the interlayer (20), the top layer (30).

3. A method according to claim 1, ***characterized in that;*** when forming the unidirectional extending fibrous structure consisting of at least three layers as base layer (10), interlayer (20), top layer (30), at least one layer of adhesive interlayer (70) between two successive layers to apply a top layer, and then the entire structure is cured with UV light.

4. The method according to claim 1, ***characterized in that;*** that includes a unidirectional extending fiber component, which is UD tape.

5. The method according to claim 1, ***characterized in that;*** which consists of providing multi-directional strength the unidirectional fiber components by laid in different directions, which are UD tapes.

6. The method according to claim *1, **characterized in that;*** the absorber (A) that is located on the strength increasing component (M) on the bumper (B), is integrated between the layers during the formation of the said strength increasing component (M).

7. The method according to claim *1, **characterized in that;*** where the absorber (A) on the strength increasing component (M) on the bumper (B) is mounted on the insert (40) integrated between the layers during the formation of the said strength increasing component (M).

8. The method according to claim *1, **characterized in that;*** wherein each layer is cured using a Xenon lamp during the formation of the strength enhancing component (M).

9. The method according to claim *1, **characterized in that;*** curing processes are applied with UD tapes and using Xenon lamp on the bumper (B) using a 5-axis robot.

10. The method according to claim *1, **characterized in that;*** to enable direct mounting of the components, the inserts (40) that contains bolts are positioned between the two layers during the formation of the strength increasing component (M)

11. The method according to claim *1, **characterized in that;*** the base layer (10) is adhered to the bumper (B) using ultrasonic surface welding.

12. The method according to claim *1, **characterized in that;*** the unidirectional fibrous structure in UD tapes is cured on the condition that it is laid in more than one direction in each different layer.

13. The method according to claim 12, ***characterized in that;*** it is cured by laying at 0°-90°, 0°-45°-90°-135° angles regardless of the order.

## Patentansprüche

1. Verfahren in Fahrzeugen an den Stoßfängern (B), um die Montage eines Sensors (S), einer Klammer (C) oder eines Absorbers (A) an der Innenseite des Stoßfängers (B) zu ermöglichen, wodurch die Festigkeit erhöht und eine stoßdämpfende Wirkung in den vorgesehenen Montagebereichen des Stoßfängers (B) erzielt wird, **gekennzeichnet durch** die Durchführung von Verfahrensschritten;
a. in der festigkeitssteigernden Komponente (R), bestehend aus Bändern mit unidirektional verlaufender Faserstruktur, bestehend aus mindestens drei Schichten, nämlich der Grundschicht (10), der Zwischenschicht (20), der Deckschicht (30),
b. Positionierung mindestens eines Einsatzes (40) zwischen mindestens zwei aufeinanderfolgenden Schichten der genannten Schichten,
c. Positionierung mindestens einer Halterung (50) zur Befestigung von Bauteilen zwischen mindestens zwei aufeinanderfolgenden Schichten der genannten Schichten,
d. Aushärten der genannten Schichten mit UV-Licht während der Anwendung.

2. Verfahren nach Anspruch 1, ***dadurch gekennzeichnet, dass*** nach dem Aushärtungsprozess der vorherigen Schicht mindestens eine Schicht Klebstoffzwischenschicht (70) zwischen zwei aufeinanderfolgenden Schichten aufgebracht wird, um eine obere Schicht aufzubringen, wenn eine unidirektionale Faserstruktur gebildet wird, die aus mindestens drei Schichten besteht, nämlich der Grundschicht (10), der Zwischenschicht (20) und der Deckschicht (30).

3. Verfahren nach Anspruch 1, ***dadurch gekennzeichnet, dass*** bei der Bildung der unidirektional verlaufenden Faserstruktur, die aus mindestens drei Schichten als Grundschicht (10), Zwischenschicht (20) und Deckschicht (30) besteht, mindestens eine Schicht aus einer Klebstoffzwischenschicht (70) zwischen zwei aufeinanderfolgenden Schichten aufgebracht wird, um eine Deckschicht aufzubringen, und dann die gesamte Struktur mit UV-Licht ausgehärtet wird.

4. Verfahren nach Anspruch 1, ***dadurch gekennzeichnet, dass*** es eine unidirektional verlaufende Faserkomponente umfasst, bei der es sich um UD-Band handelt.

5. Verfahren nach Anspruch 1, ***dadurch gekennzeichnet, dass*** es darin besteht, den unidirektionalen Faserkomponenten durch in verschiedenen Richtungen verlegte UD-Bänder multidirektionale Festigkeit zu verleihen.

6. Verfahren nach Anspruch 1, ***dadurch gekennzeichnet, dass*** der Absorber (A), der sich auf der festigkeitssteigernden Komponente (M) am Stoßfänger (B) befindet, während der Bildung der festigkeitssteigernden Komponente (M) zwischen die Schichten integriert wird.

7. Verfahren nach Anspruch 1, ***dadurch gekennzeichnet, dass*** der Absorber (A) auf der festigkeitssteigernden Komponente (M) am Stoßfänger (B) auf dem Einsatz (40) montiert wird, der während der Bildung der festigkeitssteigernden Komponente (M) zwischen die Schichten integriert wird.

8. Verfahren nach Anspruch 1, ***dadurch gekennzeichnet, dass*** jede Schicht während der Bildung der festigkeitssteigernden Komponente (M) unter Verwendung einer Xenonlampe ausgehärtet wird.

9. Verfahren nach Anspruch 1, ***dadurch gekennzeichnet, dass*** Aushärtungsprozesse mit UD-Bändern und unter Verwendung einer Xenonlampe auf dem Stoßfänger (B) unter Verwendung eines 5-Achsen-Roboters durchgeführt werden.

10. Verfahren nach Anspruch 1, ***dadurch gekennzeichnet, dass*** zur Ermöglichung einer direkten Montage der Komponenten die Einsätze (40), die Bolzen enthalten, während der Bildung der festigkeitssteigernden Komponente (M) zwischen den beiden Schichten positioniert werden

11. Verfahren nach Anspruch 1, ***dadurch gekennzeichnet, dass*** die Grundschicht (10) mittels Ultraschall-Oberflächenschweißen an den Stoßfänger (B) geklebt wird.

12. Verfahren nach Anspruch 1, ***dadurch gekennzeichnet, dass*** die unidirektionale Faserstruktur in UD-Bändern unter der Bedingung ausgehärtet wird, dass sie in jeder einzelnen Schicht in mehr als einer Richtung verlegt wird.

13. Verfahren nach Anspruch 12, ***dadurch gekennzeichnet, dass*** es durch Verlegen in Winkeln von 0°-90°, 0°-45°-90°-135° unabhängig von der Reihenfolge ausgehärtet wird.

## Revendications

1. Une méthode dans les véhicules sur les pare-chocs (B), pour assurer le montage d'un capteur (S), d'un clip (C) ou d'un absorbeur (A) à l'intérieur du pare-chocs (B), ce qui augmente la résistance et crée un effet d'amortissement des chocs dans les zones de montage désignées dudit pare-chocs (B), **caractérisée par** la mise en œuvre des étapes suivantes:
a. Dans le composant renforçant la résistance (R), constitué de bandes à structure fibreuse unidirectionnelle, composées d'au moins trois couches, à savoir la couche de base (10), la couche intermédiaire (20) et la couche supérieure (30),
b. Positionner au moins un insert (40) entre au moins deux couches consécutives desdites couches,
c. Positionner au moins un support (50) afin de monter des composants entre au moins deux couches consécutives desdites couches,
d. Durcir les couches mentionnées avec une lumière UV pendant l'application.

2. Une méthode selon la revendication 1, ***caractérisée en* ce qu'elle** comprend le procédé d'application d'au moins une couche de couche intermédiaire adhésive (70) entre deux couches successives, après le procédé de durcissement de la couche précédente, afin d'appliquer une couche supérieure lors de la formation d'une structure fibreuse unidirectionnelle composée d'au moins trois couches, à savoir la couche de base (10), la couche intermédiaire (20) et la couche supérieure (30).

3. Une méthode selon la revendication 1, ***caractérisée en ce que,*** lors de la formation de la structure fibreuse s'étendant unidirectionnel composée d'au moins trois couches comme couche de base (10), couche intermédiaire (20), couche supérieure (30), au moins une couche de couche intermédiaire adhésive (70) entre deux couches successives pour appliquer une couche supérieure, puis toute la structure est durcie avec la lumière UV.

4. Une méthode selon la revendication 1, ***caractérisée en ce qu*'elle** comprend un composant fibreux s'étendant unidirectionnel, qui est un ruban UD.

5. La méthode selon la revendication 1, ***caractérisée en* ce *qu***'elle consiste à fournir une résistance multidirectionnelle aux composants en fibres unidirectionnelles en les disposant dans différentes directions, qui sont des bandes UD.

6. La méthode selon la revendication 1, ***caractérisée en ce que*** l'absorbeur (A) qui est situé sur le composant renforçant la résistance (M) du pare-chocs (B) est intégré entre les couches lors de la formation dudit composant renforçant la résistance (M).

7. La méthode selon la revendication 1, ***caractérisée en ce que*** l'absorbeur (A) sur le composant renforçant la résistance (M) du pare-chocs (B) est monté sur l'insert (40) intégré entre les couches lors de la formation dudit composant renforçant la résistance (M).

8. La méthode selon la revendication 1, ***caractérisée en ce que*** chaque couche est durcie en utilisant une lampe au Xénon pendant la formation du composant renforçant la résistance (M).

9. La méthode selon la revendication 1, ***caractérisée en* ce *que*** les procédés de durcissement sont appliqués avec des bandes UD et en utilisant une lampe au Xénon sur le pare-chocs (B) en utilisant un robot à 5 axes.

10. La méthode selon la revendication 1, ***caractérisée en* ce que,** pour assurer le montage direct des composants, les inserts (40) contenant les boulons sont positionnés entre les deux couches pendant la formation du composant renforcé (M).

11. La méthode selon la revendication 1, ***caractérisée en* ce *que*** la couche de base (10) est collée au pare-chocs (B) en utilisant un soudage de surface par ultrasons.

12. La méthode selon la revendication 1, ***caractérisée en* ce *que*** la structure fibreuse unidirectionnelle dans les bandes UD est durcie à condition qu'elle soit posée dans plus d'une direction dans chaque couche différente.

13. La méthode selon la revendication 12, ***caractérisée en* ce** ***qu**'*elle est durcie en la posant à des angles de 0°-90°, 0°-45°-90°-135°, quel que soit l'ordre.
